# EUROPEAN PATENT APPLICATION

(11) **EP 4 458 931 A1**
(43) Date of publication of application: **06.11.2024**
(21) Application number: 23170906.4
(22) Date of filing: 01.05.2023
(51) Int. Cl.: C10L 5/48

(54) **METHOD TO PREPARE FEED BODIES FROM WASTE MATERIAL**

(71) Applicant: Subcoal International B.V., 5854 PC Nieuw - Bergen (NL)
(72) Inventor: JENNISSEN, Lars, 5854 HE Nieuw Bergen (NL)
(74) Representative: Hoyng Rokh Monegier B.V.

(57) **Abstract**

The present invention relates to a method to produce feed bodies, which are capable of providing free flowing granules and/or powder suitable for firing in an industrial furnace at one or multiple burners, the method comprising the following steps: (i) providing waste material comprising one or more thermoplastic material(s) of more than 40%, based on the total dry weight of the waste and one or more cellulosic material(s) of more than 30%, based on the total dry weight of the waste; (ii) processing the waste material in an extruder, which extruder is equipped with transport, kneading and heating elements such that the waste material is mixed and thermoplastic material is molten; (iii) wherein the material reaches a temperature of between about 110 and 200 °C, for more than about 2 sec before cooling; (iv) pressing the processed waste material through a die with holes between 2-200 mm, and providing feed bodies with a thickness between about 2-200 mm, and a length of between about 2-500 mm.

## Description

### TECHNICAL FIELD

The present invention relates to a method for preparing feed bodies from waste material and uses thereof. The feed bodies can be used as alternative fuel, waste-to-chemical reactions, reducing agent in steel manufacturing and the like.

### BACKGROUND ART

Firing an industrial furnace is a process used for example in the production of electricity. The furnaces for producing electricity are the most demanding and efficient furnaces currently in use. Other industrial furnaces that require high process stability are blast furnaces in steel production, cement kilns and lime kilns.

A furnace generally is supplied with powdery (pulverized) coal, oil or gas (as primary fuel). The fuel generally is supplied through a number of burners, lances (or tuyeres). In case the furnace is used to produce electricity, the heat of the combustion is used to produce steam, which is used to drive turbines.

The amount of pulverized coal that can be injected depends on the coal and coke quality, furnace geometry, and operational practices. Furthermore, the pulverized coal has a low bulk density and bad storage characteristics. Coal therefore is pulverized just before use. A main disadvantage of pulverized coal is the fact that it is from a non-renewable source and therefore causing substantial CO₂ emission.

Alternative fuels, or secondary fuels, are to a certain extent also used, to reduce the burden of CO2 emission. Such alternative fuels need to allow their use in seamless processing with known processes. Further, the alternative fuels need to allow injection in the flame where they need to show good burning characteristic such as e.g. time to fully burn, to burn virtually complete in the hot spot.

Alternative fuels suggested to be used for the high-end industrial furnaces are plastic pellets, mixed plastic/biomass pellets, wood pellets, sewage sludge pellets and the like.

One advantage of using plastic-only waste generally is that plastic waste has low thermal conductivity and high energy content. A disadvantage of using plastics-only waste is that such mixtures originating, for example, from domestic, urban or municipal waste are relatively valuable products that can be used to make (recycled) plastic products. A further disadvantage is, that despite a high calorific value, the waste plastic pellets are difficult to process in such a way that a suitable particle size distribution is obtained. Milling causes temperature increase, rubbery behaviour of the plastics to such an extent that cryogenic milling is necessary. Cryogenic milling is however too expensive. Furthermore, the handling of such materials is typically considered problematic due to the bad flowing behaviour.

The delivery of waste derived alternative fuel into a furnace may vary depending upon the nature of the waste material and the type of furnace being supplied. There are several ways to directly use waste derived alternative fuel in furnace technologies. Such technologies include direct use by injection of powdered alternative fuel via or at the level of the lances, co-grinding of pellets with coal as described in WO2015/155193 or mixing coal and powdered alternative fuel before injecting the mixture into the furnace. Generally, waste derived alternative fuel products cannot be fed into the burner section through the existing equipment used for fossil fuels.

Preferably, such waste derived alternative fuels are made from selected non-recyclable waste fractions of domestic, urban, or municipal waste. However, such waste fractions (also called 'fluff') often lead to fuel having poor characteristics and they can usually not be provided to existing dosing systems and burners. For example, the fuels may form clumps, or may have a high variation in particle size distribution, leading to inefficient or incomplete combustion plus they may lead to bad handling behaviour, resulting in blockages of the feeding equipment. These characteristics lead to limitations in the operation of industrial furnaces. Therefore, these alternative fuels are used in practice only to partly replace fossil fuel in high end furnaces. Generally, in actual practice, the amount of alternative fuel is less than 30%, but in most cases, less than 50% relative to the powdered coal in for example high-end furnaces for producing electricity. The powdered coal attenuates fluctuations in the refuse derived pellet materials. To increase or to make possible the use of alternative fuels, the characteristics of the fuel powder must be improved.

US2010/116181 describes pelletizing plastic/cellulosic materials with a relatively low amount of plastic (less than 40 wt%), which, according to WO2008/107042 can be milled to particles largely below 2 mm that can be used as alternative fuel in combination with powdered coal. Alternative fuel with low amount of plastic has a relatively low combustion value, which is disadvantageous if such fuel would have to fully replace coal. In addition, such milled pellets also have poor flowing characteristics, meaning that its transportation is compromised.

There is thus a need in the field for a process in which waste derived alternative fuel can be produced such that it is suitable to be supplied into an industrial furnace, preferably using existing equipment used to feed the (pulverized) fossil fuels so that the furnace is able to fully replace their fossil fuels load. Inclusion of multiple thermoplastic materials, let alone multiple cellulosic materials, will generally lead to an increased heterogeneity of the material flux. As such, there is also a need for a process to produce an alternative fuel which comprises multiple thermoplastic materials and multiple cellulosic materials, without negatively influencing the handling and flowing behaviour, as well as the combustion characteristics, preferably in a single system and having a high density.

US6635093 describes a method for producing pellets that can be used to partly replace fossil fuel in furnaces after milling. The process and products are used commercially. Experience tells that milling results in a powdery product with mediocre flow properties, in particular when milled to small particle sizes. Hence, the powder generally is supplied to the furnace through a separate dosing mechanism to obviate the flow characteristics.

WO2020/127473 describes a process for making pellets that can be ground to particulate material that allows to fire a high-end furnace for 100% with alternative fuel. This process requires dual pelletizing to attain improved pellet characteristics. Even though two pelletizing steps result in increased pellet characteristics, the milling characteristics and thereby combustion characteristics could be still further improved. In particular, although good flow characteristics of the milled powder can be achieved, the milled powder is relatively course, with 25-70 wt% of the powder having a size between 2 and 3.15 mm.

WO2022/248626 improves on WO2020/127473 with a modified process for dual pelletizing, such that the powder obtained with grinding the pellets in a hammer mill over a 3 mm screen allows to obtain powder with good flow properties with more than 60 wt% of the powder being smaller than 2 mm.

Pelletized waste which can be milled to good flowing powder can be used for replacing fossil fuel, waste-to-chemical processes, reducing agent in steel and other processes.

There is a desire for a process of producing feed bodies from waste materials, which if ground, has improved handling and flowing characteristics. Powdery product being fine while still being good flowable has the further advantage of allowing reliable downstream processing in furnaces (for example improved combustion characteristics), steel manufacture (as reducing agent), waste-to-chemical processes or the like.

### SUMMARY OF THE INVENTION

The object of the present invention is to provide feed bodies comprising a mixture of thermoplastic material and a cellulosic material that can be used - after milling or crumbling - to reliably replace a fossil fuel in high end industrial furnaces, in 3articular used in modern equipment. Preferably, the feed bodies can be used to replace fossil fuel for 70% or more of the energy requirement of an industrial furnace, preferably more than 90% of the energy requirement of said furnace, more preferably more than 95% of the energy requirement of said furnace. The feed bodies may be used to completely replace the fossil fuel in industrial furnaces.

To adequately replace fossil fuels, fuel quality plays a large role. However, the operational implementation, dependent on production characteristics is also important to allow for seamless incorporation of the alternative fuel in existing industrial furnaces.

In a first aspect, the invention relates to a method to produce feed bodies, which are capable of providing free flowing granules and/or powder suitable for firing in an industrial furnace at one or multiple burners, the method comprising the following steps:
i. providing waste material comprising one or more thermoplastic material(s) of more than 40%, based on the total dry weight of the waste and one or more cellulosic material(s) of more than 30%, based on the total dry weight of the waste, optionally in the form of pellets;
ii. processing the waste material in an extruder, which extruder is equipped with transport, kneading and heating elements, such that the waste material is mixed and thermoplastic material is molten;
iii. wherein the material reaches a temperature of between about 120 and 200 °C, for at least about 2 sec before being cooled;
iv. pressing the processed waste material through a die with holes between 2-200 mm;
v. providing feed bodies with a thickness between about 2-200 mm, and a length of between about 2-500 mm.

Although some literature describes extrusion processes for treating plastic waste materials, it was unexpected that using an extruder with the parameters as described now, using a mixture of plastic and cellulosic materials as source material, results in feed bodies with highly effective milling characteristics, which also results in a fine particle size and good flowability properties.

The feed bodies can have any cross-sectional shape. In the event that the feed bodies have a non-round cross-section, the thickness relates to a major cross-sectional distance. In the event where the cross-section of the feed bodies is round, the thickness is the diameter. In case the feed bodies have an irregular shape, the size of such body refers to the largest distance within a particle.

Document GB2237028A discloses a solid fuel comprising a mixture of plastics, originating from municipal waste and wooden materials together with inert materials. The municipal plastic waste may be ground, mixed with wooden materials and undergo an extrusion process, whereby continuous rods and bars are produced having a diameter of between 5-10 cm, and subsequently cut to the desired length. The rods are used as such in stoves.

Document EP1428642A1 discloses a method for compression moulding waste plastics through a moulding machine having extrusion holes of a diameter of 5 to 80 mm. In this process, only plastics are utilized and moulding takes place at 110 or 120 °C.

Document CA2658030A1 discloses the production of solid fuel by solidification of plastic, waste paper and waste food. Water is added to increase the moisture content to 15 wt% or more, after which the mixture is subjected to blending, compression and extrusion in three turns or less, and extruded out from a shaping nozzle. The water content of the processing-object materials is about 15 wt% in order to control the temperature to stay within a temperature range of 100 °C to 140 °C.

Document RU2729638C1 discloses a method of processing municipal solid waste into refuse derived fuel by thermoplastic extrusion. Selected waste is dried to a moisture content of about 5% to 15% and subsequently crushed to a fraction of 5-50 mm. The mass is then heated to a temperature of 180-250°C to decompose PVC and subjected to thermoplastic extrusion to obtain pellets or briquettes, which are used as such as fuel.

### DETAILED DESCRIPTION

In a first aspect, the invention relates to a method to produce feed bodies, which are capable of providing free flowing granules and/or powder suitable for firing in an industrial furnace at one or multiple burners, the method comprising the following steps:
i. providing waste material comprising one or more thermoplastic material(s) of more than 40%, based on the total dry weight of the waste and one or more cellulosic material(s) of more than 30%, based on the total dry weight of the waste, optionally in the form of pellets;
   preferably preheating the feed to the extruder;
ii. processing the waste material in an extruder, which extruder is equipped with transport, kneading and heating elements such that the waste material is mixed and thermoplastic material is molten;
iii. wherein the material reaches a temperature of between about 120 and 200 °C, for at least about 2 sec before being cooled;
iv. pressing the processed waste material through a die with holes between 2-200 mm,
v. providing feed bodies with a thickness between about 2-200 mm, and a length of between about 2-500 mm.

With the process of the invention feed bodies are produced, having a high homogeneity. By providing feed bodies having a high homogeneity, the feed bodies can be ground to homogeneous particles (granules) or powder, without the problem of having threads or other relatively long plastic film particles, causing problems in transporting the powder. The homogeneity relates to the continuous phase in the particles, i.e. the molten plastic phase.

The waste material may be provided to the extruder in any shape or form. The advantage of using an extruder is that the dependence on the primary composition and form influences the quality of the feed bodies to a lesser extent than with conventional pelletizing methods. In addition, the moisture rate is of less importance to the final feed body composition. It appeared that, unexpectedly, substantial cost savings are possible in comparison with die pressing in energy requirements and maintenance.

It is noted that the extruder forms a cake which is moulded into strands with the diameter or intersection of the feed bodies. The shape of the feed bodies can be freely chosen by forming the cake into the chosen form, which is determined by the shape of the die of the extruder.

In one embodiment, the strands are cut directly at the die, into feed bodies. The feed bodies are then gathered, e.g. on a conveyer belt, and (further) cooled with for example, forced air.

In another embodiment, the strands are taken up on a conveyer belt or the like, and cooled - e.g. with air - to a temperature that allows braking and/or cutting the strands into pieces. The resulting feed bodies generally have a thickness between about 2-200 mm, and a length of between about 2-500 mm

The feed bodies with a high homogeneity therefore allows the production of relatively homogeneous granules and/or powder, which provides good flowing properties. That is, when for example the powder is led to a furnace through multiple smaller pipes, the powder does not clump together and does not clog the pipes, thus existing feeding systems and burners can be used to accurately dose the alternative fuel.

Alternatively, small feed bodies may be used directly in the furnace, without the need to grind them to a powder. Suitable applications include cement kilns, lime kilns, and blast furnaces.

In this invention, the temperature of at least a part of the main body of the extruder preferably is between about 110 and 240°C.

The temperature range of between 120 - 200 °C in the extruder ensures that the temperature is sufficiently low to prevent devolatilization or combustion of the components of the waste material and is sufficiently high to provide sufficient ductility of the thermoplastic material during mixing. If the temperature is too low, the feed body will be formed but they will not have the homogeneity leading to characteristics required for efficient use in an industrial furnace, such as bad flow properties after grinding. Preferably, the temperature of the mixture in the extruder has a temperature between 140 - 190 °C, even more preferable between 150 -190 °C. The (average) residence time in the extruder generally is about 10 sec or longer, preferably about 20 min or longer and more preferably about 0.5 min or longer like for example 1 min or longer. Generally, the residence time will be 20 min or less, preferably 10 min or less, and even more preferably about 5 min or less. The upper limit of the residence time is largely determined based on economic reasons. The residence time is largely influenced by the feed rate, and a higher feed rate is preferred for economic reasons. It is important in the present invention, that the thermoplastic material has been sufficiently molten, and subject to sufficient time in the extruder to obtain feed bodies with a substantially homogeneous continuous phase.

Feed bodies according to the present invention have a typical largely homogeneous dark colour. In contrast, pellets as produced according to the prior art are lighter, and generally clearly inhomogeneous when looked at them from the outside. Milling the product from the prior art shows a very big difference in both particle size distribution as in particle flow behaviour.

In a preferred embodiment, at least some of the heating elements of the extruder are positioned in the die of the extruder.

In an embodiment of the invention, the main body of the extruder preferably is heated to achieve effective melting and mixing in the extruder. The forced mixing of the mass liberates heat to the extruder, while the feed preferably is heated as well. Generally, the average temperature of the main body of the extruder is between about 140 and 240 °C, preferably between about 150 and 220 °C, more preferably of between about 160 and 220 °C, still more preferably of between about 170 and 220 °C.

The average heating temperature is defined as the average temperature of the extruder body in regions that are actively heated by one or more heating elements provided in the extruder body. The heating may also be done indirectly. At least part of the heating is caused by the moulding of the materials by the extruder.

In a preferred embodiment, the main body of the extruder is divided into at least two sections, a first upstream section being heated to a higher temperature than a second downstream section, or the other way around. The heating of separate sections of the main body of the extruder allows for increased control on the melting characteristics of the waste material such that the material is efficiently mixed and melted, in a homogenous manner, without burning the waste material. A gradual increase of temperature creates a homogeneous cake which may be brought into the desired shape at the end of the extruder. In addition, having a second section being provided in a downstream region of the extruder, leads to an increased pressure at the die, since the viscosity of the partially mixed and melted waste material is increased. By increasing the pressure, the density of the feed body, formed from the waste material, is improved.

The extruder may be equipped with a vacuum exhaust, to remove vapours and other volatile gaseous compound. Applying a vacuum can improve the homogeneity of the continuous phase, and generally improve the properties of the feed bodies. Generally, a vacuum exhaust is present in the first halve of the extruder, like on 1/5^{th}, 1/4^{th} or 1/3^{rd} of the extruder length, viewed from the input side of said extruder.

In a preferred embodiment, the extrusion is performed for between about 10 sec and 10 min, more preferably for between about 40 sec and 8 min, and even more preferably for between about 1 min and 6 min. Such processing times advantageously result in homogeneous feed bodies with well-molten plastic materials and allow for properly mixing the cellulosic material with the thermoplastic material such that the fibres attain improved characteristics, in particular relating to grindability and flow properties of the powder achieved after grinding. Insufficient heating and or mixing will lead to poorly molten material and thus poor flowability properties after grinding.

In a preferred embodiment, the waste material comprises at least one of: one or more thermoplastic material(s) in an amount of 40-70 weight %, based on the total dry weight of the feed bodies; one or more cellulosic material(s) of about 30-50 weight %, based on the total dry weight of the feed bodies. By mixing the cellulosic material with plastic, the fibres of the cellulosic materials attain improved properties with respect to grindability.

In an embodiment, the waste has a particle size distribution with more than 80% larger than 5 mm, preferably with more than 20% larger than 20 mm, and wherein the waste has a particle size distribution with more than 95% smaller than 60 mm, preferably with more than 90% being smaller than 40 mm.

As an alternative embodiment, whole pelletized waste may be included in the waste material as input to the method to produce feed bodies. In case the waste is provided in the form of pelletized waste, such pellets may have a thickness between about 3-40 mm, preferably of between about 5-20 mm, still more preferably of between about 6-10 mm. The thickness is an average thickness over the length of the pellets and is defined by a major distance of the lateral cross-section of the pellets. Such pellets may be produced with waste material as described above, with processes known in the art, like for example as described in US6635093.

In an embodiment, the waste has a moisture content of less than about 15 wt%, preferably of less than about 10 wt%, more preferably of less than about 8 wt%. By providing waste with a lowered moisture content, the production of gasses during extrusion is reduced.

The waste material, whether in the form of fluff, or of pellets, preferably is preheated before feeding into the extruder. Heating preferably is done with heated air, or oxygen depleted air. The waste material - when heated - is heated to a temperature of less than 180 °C, preferably less than 150 °C, to preclude (chemical) decomposition of components of the waste. More preferably, the waste is heated to a temperature between about 40 °C and 140 °C, like for example 50-90 °C.

The feed bodies produced with the method of the invention may have other shapes than the usual cylindrical shapes, such as for example square, triangular, rectangular, semicircular, or the like.

In an embodiment, the feed bodies have a length of between 3-400 mm, preferably of between 3-200 mm, more preferably of between 4-60 mm, still more preferably of between 5-30 mm.

The thickness and length of the feed bodies may define a length ratio of about 0.5 or more, preferably of about 1 or more, still more preferably of between about 2 and 10. The length ratio (or aspect ratio) of the feed body is determined as the length of the feed body, divided by its thickness or diameter. For example, a feed body having a length of 32 mm, and a diameter of 8 mm, has a length ratio of 4. If the length and/or thickness of the feed body is not constant, average values are used to determine the length ratio. Generally, the length ratio is about 10 or less.

In a preferred embodiment, a temperature of the feed body at the exit side of the die is between about 100 and 200 °C, preferably of between about 120 and 180 °C. If a heated, or non-cooled die is used, the temperature may be between about 120 and 210 °C, still more preferably of between about 130 and 200 °C. Such temperatures are indicative of sufficient melting behaviour in the extruder. In case a cooled die is used, the temperature may be lower, such as for example between 40-140 °C, preferably between 60-110 °C. Such temperature may improve cutting of the feed bodies directly outside of the die.

In a preferred embodiment, a non-cooled or heated die is used.

In an embodiment, a temperature of the die is between about 140 and 250 °C, preferably of between about 140 and 200 °C. At such temperature, the moulded material flows relatively easily through the die, and the pressure built-up in the extruder is relatively limited. In an alternative preferred embodiment, the die comprises a cooled die, said cooled die having a temperature of between about 0 and 120 °C, preferably of between about 10 and 100 °C, more preferably of between about 15 and 80 °C, still more preferably of between about 20 and 70 °C. The cooled die reduces the temperature of the feed bodies, such that these can be more easily cut directly at the outside of the die.

In a preferred embodiment, the method further comprises the step of cooling the feed bodies to a temperature of about 50 °C or lower, preferably of about 40 °C or lower, more preferably about 30 °C or lower. Cooling may be achieved by natural or forced cooling, preferably by using air. Strands of material exiting the die may be taken up on a conveyer belt or the like and allowed to cool. After cooling, the strands are sufficient hard and brittle to be coarsely ground, cut or broken into granules or pellets, to achieve the feed bodies of the invention.

In a preferred embodiment, the feed bodies have a Kahl hardness of more than 22 kgf, preferably of more than 30 kgf, more preferably of more than 35 kgf. In a preferred embodiment, the Kahl hardness of 8 mm diameter feed bodies is more than 35 kgf, preferably 40 kgf or more, while being about 60 kgf or less.

The feed bodies preferably have a bulk density of more than 250 kg/m3, preferably of more than 300 kg/m3, more preferably of about 350 kg/m3 or more. Generally, the density will be lower than about 500 kg/m3, like for example below 450 kg/m3. The bulk density (tapped) of the feed bodies preferably is between about 350 kg/m3 and 450 kg/m3.

In an embodiment, the calorific value (LCV) of the feed bodies is between about 19 and 28 GJ/ton. This reflects the composition of the feed bodies comprising both plastic and biogenic (cellulose-type) of materials.

In an embodiment, the hydrogen content of the feed bodies is in the range of 7 to 8 w% of the dry weight feed bodies. In an embodiment, the oxygen content of the feed bodies is in the range of 20 to 30 w% of the dry weight feed bodies.

According to an aspect of the invention, there are provided feed bodies obtainable with any of the methods discussed hereinbefore, preferably obtained with any of the methods discussed hereinbefore.

According to an aspect of the invention, there is provided a powder, obtainable by milling the feed bodies of the invention, wherein the powder is preferably obtained by milling the feed bodies according to the invention.

According to an aspect of the invention, there is provided a method of producing a powder, comprising the steps of: providing feed bodies according to the invention; and milling the feed bodies in a mill to produce powdery feed in the form of particles.

In an embodiment, the mill is one or more of a hammer mill, a jet mill, a roller or ball mill. Preferably, the mill is a hammer mill. A hammer mill - like most mills - generally has a screen with a size limitation, like 3 mm screen, 5, 6, or 8 mm screen. When pellets made from waste are milled, it has proved very difficult to make such pellets in a way that when using the smallest screen of 3 mm, powder with good flow properties is obtained. The present invention allows to achieve feed bodies that can be milled in a hammer mill over a 3 mm screen and obtain powder with good flow properties.

The feed bodies can be milled in a hammer mill with screens other than 3 mm. with such larger screen, like 5 mm, 6, or 8 mm screens somewhat larger particles are obtained, and the powder has very good flow properties. A larger screen size allows greater throughput through the mill, and/or less energy input.

In an embodiment, the feed bodies are milled in a hammer mill with a 3mm screen to achieve a particle size such that more than 95 wt% of the particles have a particle size lower than 3.15 mm and more than 80% smaller than 2 mm. This ground material still has good flow properties. In a preferred embodiment, the feed bodies are milled in a hammer mill with a 3mm screen to have a particle size distribution such that about 85% or more is smaller than 2 mm, preferably more than 90% is smaller than 2 mm.

In a preferred embodiment, the powdery product obtained by grinding feed bodies in a hammer mill over a 3 mm screen has a bulk density of more than 180 kg/m3, preferably of more than 200 kg/m3. Generally, the of the bult density of the powder is about 400 kg/m3 or lower, like for example about 350 kg/m3 or lower. Preferably the powder as a bulk density of between about 200 to about 300 kg/m3.

The powder from the milled feed bodies can be analysed for particle size distribution according to the methods DIN 18123: 2011-04 and DIN-EN 15149-1&-2: 2011-01. Generally, sieve fractionating over 0.5 mm, 1 mm, 2 mm, 3.15 mm and >5 mm sieves is reported.

Flow properties are not very simple to measure. Yet, a practical method is the following: The flow properties were measured by sieving the milled product manually over a 2 mm sieve (without air forced over the sieve) and determining whether the product that remains on the sieve was homogeneously particulate, or entangled ball-like. Irrespective of this test, milling of the pellets produced according to the different processes generally results in a powder in which fibrous material is visible, which causes deterioration of flow properties.

In another embodiment, the feed bodies are cut, broken, or coarsely ground to feed granules. Such granules may have an average length of between 1-5 mm, wherein the length is the largest measure of the granules. With such granules, powdery product may be present, preferably in an amount of about 10 wt% or less (without deteriorating the flow properties). The process to provide granular material comprises the steps of providing feed bodies according to the invention to a granulator, breaker, cutter or the like, reducing the size of the feed bodies to granules having a size such that more than 90% is larger than 0.5 mm, and more than 90% is less than 10 mm, preferably having an average size between 1-5 mm.

According to an aspect of the invention, there is provided a process of firing an industrial furnace comprising the steps of: providing feed bodies according to the invention; grinding the feed bodies in a mill to produce powdery fuel in the form of particles, preferably to achieve a particle size such that more than 90 wt% of the particles have a particle size lower than 3.15 mm, preferably more than 40% is smaller than 2 mm; and feeding the powdery fuel into the flame(s) or burner(s) of the furnace. Any amount of alternative fuel may be used in the furnace, like for example 5% or more of the energy requirement, or 10% or more. In a preferred embodiment, the fuel is used in an amount to provide more than 50% of the energy requirement of said furnace, preferably more than 70% of the energy requirement of said furnace, more preferably more than 80% of the energy requirement of said furnace.

According to an aspect of the invention, there is provided the use of the feed bodies according to the invention as fuel for an industrial furnace. In an embodiment, the feed bodies are used after being ground to particles, preferably such that more than 80% more preferably more than 90 wt% of the particles have a particle size lower than 3.15 mm, and preferably more than 40% has a particle size below 2 mm, more preferably more than 60% has a particle size below 2 mm.

In another or additional embodiment, the feed bodies are used without being ground to particles. Such feed bodies generally are relatively small, and have a diameter preferably between 2-8 mm, more preferably between 3-6 mm. The length preferably is about the same as the diameter or slightly more, like up to twice the diameter.

In another embodiment, the fuel is used as granules optionally with powder present, as described above.

In an embodiment, the industrial furnace is used in a process to produce electricity. In a preferred embodiment, the industrial furnace is used in a lime furnace, a cement furnace, or a steel furnace.

The feed bodies, granules and/or powder can also be used in other processes where recycle streams can be used, such as for example torrefaction or waste-to-chemical processes.

### EXAMPLES

### Example 1-3 and comparative experiments A-B

A series of tests have been conducted with sorted municipal waste comprising about 45-60% plastic, about 30-45% biomass, about 5-15% other materials and about 5% moisture.

Four tests were executed. These tests are Comparative experiment A and B and examples 1-3. Examples 1 and 2 used pellets as described in WO2020/127473 as feed for the extruder, comparative experiments A and B and example 3 used fluff directly.

The extrusion was performed using a KM (example 1) or a DEX500 extruder (examples 2 and 3) having a heating system in the extrusion body and the die. The DEX500 device has a production capacity of between about 4 to 5 Tn/h. The dies have openings having a diameter of 8 mm. The dies can be heated up to 280 °C, while the extrusion body can be heated up to 250 °C. The electrical consumption of the extruder was between about 40 to 50 kWh/Tn. The extruder has a maximum machine power of 200 kW at 1500 rpm and a nominal speed of 23 rpm. The extruder has a production capacity of 5.8 Tn/h for feed bodies having a density of 0.45 Tn/m³, using 38.63 kWh/Tn and thus relates to a production of 1.29 Tn/h for fluff having a density of about 0.1 Tn/m³.

The extrusion step was done through a die having 8 mm holes. The thickness of the die was about 5 cm. The residence time was about 2 min. The feed body temperature at the die exit was about 130 °C in these experiments.

Comparative experiments A and B were performed by double pelletizing as described in WO2020/127473, example 3, while A was milled over a 3 mm screen, B was milled over a 6 mm screen.

The feed bodies of examples 1-3 were milled using a hammer mill with 108 m/s and a 3 mm screen. The powder from the milled feed bodies have been analysed for particle size distribution according to the methods DIN 18123: 2011-04 and DIN-EN 15149-1&-2: 2011-01. Sieve fractionating over 0.5 mm, 1 mm, 2 mm, 3.15 mm and >5 mm yielded the results as reported in the following table. The flow properties were measured by sieving the milled product manually over a 2 mm sieve (without air forced over the sieve) and determining whether the product that remains on the sieve was homogeneously particulate, or entangled ball-like.

| Size distribution | Comp. exp. A (3 mm screen) | Comp. exp. B (6 mm screen) | Example 1 | Example 2 | Example 3 |
|---|---|---|---|---|---|
| Fraction < | Wt% | Wt% | Wt% | Wt% | Wt% |
| 0.5 mm | 13 | 9 | 27 | 21 | 27 |
| 1 mm | 24 | 19 | 49 | 35 | 48 |
| 2 mm | 60 | 41 | 93 | 71 | 93 |
| 3.15 mm | 87 | 94 | 98 | 100 | 100 |
| > 5 mm | 97 | 100 | 99 | 100 | 100 |
| Flow properties | mediocre | good | good | good | Good |

As shown in the above table, the powder fractions are superior to the comparative experiments A and B as they are milled to smaller particle sizes while having good flow properties. The products according to this invention can be provided to an industrial furnace without clumping and without compromising combustion characteristics.

The products of examples 1-3 had the following characteristics:
- Kahl hardness of 8 mm pellets: 40-60 kgf
- Density of feed bodies 350-450 kg/m3
- Density of powder 200-300 kg/m3

### Examples 4-6 and comparative experiments C-E

Further tests were performed as follows: Waste materials milled and sieved over a 30 mm screen comprising about 50 wt% plastic and about 40 wt% cellulose waste with 4% moisture was extruded wherein the exit temperature on the die was measured to be between 150-170 °C. The product obtained after extrusion (8 mm diameter, length about 15-20 mm) was milled in a hammer mill using 3 different sieves, 3, 6 and 8 mm. The powder properties were compared with milled pellets that were produced according to US6635093. The particle size distribution was measured, and the flow properties. The flow properties were measured by sieving the milled product manually over a 2 mm sieve (without air forced over the sieve) and determining whether the product that remains on the sieve was homogeneously particulate, or entangled ball-like.

The results are as follows:

| | Example 4 | Exp. C | Example 5 | Exp. D | Example 6 | Exp. E |
|---|---|---|---|---|---|---|
| Sieve fraction over | 3 mm | 3 mm | 6mm | 6mm | 8mm | 8mm |
| 5mm | 100.00% | 100.00% | 98.40% | 98.00% | 98.00% | 90.00% |
| 3.15mm | 98.00% | 96.00% | 91.24% | 58.67% | 88.00% | 55.00% |
| 2mm | 92.00% | 54.67% | 67.36% | 40.00% | 64.00% | 34.00% |
| 1mm | 50.00% | 34.00% | 27.76% | 16.67% | 28.00% | 14.00% |
| 0.5mm | 30.00% | 28.67% | 15.24% | 14.67% | 16.00% | 12.00% |
| Flow properties | good | Very bad | Very good | bad | Very good | bad |

### Examples 7-10

Further tests have been executed on an extruder. Examples 7 and 9 were done with waste material (fluff) as input source, while examples 8 and 10 were done with once pelletized, standard Subcoal^{®} material (such material is available from N&P, The Netherlands, and produced in accordance with US6635093). The material was pre-heated with hot air at to between 110-130 °C shortly before entering the extruder by heated air, while the extruder was heated to 150-160 °C. The temperature of the die was held between 170-190 °C.

As indicated in the following table, strands of material were made with a 16 mm diameter and with 8 mm diameter. The temperature of the strand-material at the output of the die was measured to be between 150-170 °C. The results show that 16 mm diameter material has the advantage of higher throughput, while still achieving very good properties.

The strands were taken up on a conveyer belt and cooled with an air flow till below about 80 °C, preferably below about 40 °C, and broken in a mill to obtain pelletized or granulated material with a length of between 2-40 mm.

| Example | 7 | 8 | 9 | 10 |
|---|---|---|---|---|
| | | | | |
| Temperature extrusion body in (°C) | 126 | 118 | 128 | 138 |
| Speed extruder (Hz) | 24 | 29 | 16 | 18 |
| Temperature bench (°C) | 150 | 160 | 160 | 150 |
| | | | | |
| Temperature extrusion body out (°C) | 154 | 150 | 170 | 165 |
| Mould hole diameter (mm) | 16 | 16 | 8 | 8 |
| Temperature die (°C) | 178 | 186 | 190 | 181 |

The product was milled in a hammer mill over a 5 mm screen. Milling over a larger screen has the advantage of higher throughput and/or less energy input than when a 3 mm screen is used.

| example | 7 | 8 | 9 | 10 |
|---|---|---|---|---|
| Sieve fraction over | 5 mm screen | | | |
| 5mm | 98% | 100% | 100% | 100% |
| 3.15mm | 88% | 86% | 90% | 88% |
| 2mm | 56% | 44% | 59% | 54% |
| 1mm | 20% | 12% | 24% | 22% |
| 0.5mm | 10% | 6% | 12% | 12% |
| Flow properties | Very good | Very good | Very good | Very good |

The invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

## Claims

1. Method to produce feed bodies, which are capable of providing free flowing granules and/or powder suitable for firing in an industrial furnace at one or multiple burners, the method comprising the following steps:
i. providing waste material comprising one or more thermoplastic material(s) of more than 40%, based on the total dry weight of the waste and one or more cellulosic material(s) of more than 30%, based on the total dry weight of the waste;
ii. processing the waste material in an extruder, which extruder is equipped with transport, kneading and heating elements such that the waste material is mixed and thermoplastic material is molten;
iii. wherein the material reaches a temperature of between about 120 and 200 °C, for more than about 2 sec before being cooled;
iv. pressing the processed waste material through a die with holes between 2-200 mm;
v. providing feed bodies with a thickness between about 2-200 mm, and a length of between about 2-500 mm.

2. Method according to claim 1, wherein the waste has a particle size distribution with more than 80% larger than 5 mm, preferably with more than 20% larger than 20 mm, and wherein the waste has a particle size distribution with more than 95% smaller than 60 mm, preferably with more than 90% being smaller than 40 mm.

3. Method according to any of the preceding claims, wherein the waste material is pelletized before providing the waste material to the extruder.

4. Method according to any of the preceding claims, wherein the waste material is heated before processing the material in an extruder, preferably to a temperature of about 150 °C or lower.

5. Method according to any one of the preceding claims, wherein the main body of the extruder is heated to an average temperature of between about 110 and 240 °C, preferably of between about 130 and 220 °C.

6. Method according to any of the preceding claims, wherein said processing is performed for between about 20 sec and 10 min, preferably for between about 0.5 min and 8 min.

7. Method according to any of the preceding claims, wherein a temperature of the extruded material at an exit side of the die is between about 100 and 200 °C, preferably of between about 140-200 °C.

8. Method according to any of the preceding claims, wherein the method further comprises the step of cooling the extruded material to a temperature of about 80 °C or lower, preferably of about 60 °C or lower, more preferably about 40 °C or lower.

9. Method according to any of the preceding claims, wherein the extruded material is cut, ground or broken into feed bodies have a length of between 3-400 mm, preferably of between 3-200 mm, more preferably of between 4-60 mm, still more preferably of between 5-30 mm.

10. Method according to any of the preceding claims, wherein the feed bodies have a bulk density of about 300 kg/m3 or more, preferably of about 350 kg/m3 or more, and about 500 kg/m3 or less, preferably about 450 kg/m3 or less.

11. Feed bodies obtainable with the method of any of claims 1-10, preferably obtained with the method of any of claims 1-10.

12. Method of providing granular material, comprising the steps of providing feed bodies according to claim 11 to a granulator, breaker, cutter or the like, reducing the size of the feed bodies to granules having a size such that more than 90% is larger than 0.5 mm, and more than 90% is less than 10 mm.

13. Method of producing a powder, comprising the steps of: providing feed bodies according to claim 11, or granular material according to claim 12; milling the material in a mill, preferably hammer mill, to produce powdery feed in the form of particles.

14. Method of claim 13, wherein the powder obtained has a particle size such that more than 80 wt% of the particles have a particle size lower than 3.15 mm, and more than 40%, and wherein preferably the powder has a bulk density of about 200 kg/m3 or more.

15. Use of the feed bodies according to claim 11, granular material of claim 12, or powder obtained from the method according to any one of claims 13-14, as fuel for an industrial furnace, preferably an industrial furnace producing electricity, an industrial furnace used in a lime, cement, or steel production, or as feed in a waste-to-chemical process.
